(19) Europäisches Patentamt
European Patent Office
Office européen des brevets

(11) **EP 1 850 597 A1**

(12) **EUROPEAN PATENT APPLICATION**

(43) Date of publication:
**31.10.2007  Bulletin 2007/44**

(51) Int Cl.:
**H04N 7/26** (2006.01)  **G06F 17/14** (2006.01)

(21) Application number: **06008407.6**

(22) Date of filing: **24.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Universität Dortmund**
**44227 Dortmund (DE)**
• **National Taiwan University of Science and Technology**
**Taipei City**
**106 (TW)**

(72) Inventors:
• **Ruan, Shanq-Jang**
**6F., No.2, Alley 69**
**Taipei City 114 (TW)**
• **Heyne, Benjamin**
**44149 Dortmund (DE)**
• **Götze, Jürgen**
**44229 Dortmund (DE)**
• **Sun, Chi-Chia**
**5F., No. 25**
**Taipei  115 (TW)**

(74) Representative: **Schneider, Uwe**
**Patentanwalt**
**Holbeinstrasse 27**
**59423 Unna (DE)**

(54) **Method and circuit for performing a cordic based Loeffler discrete cosine transformation (DCT), particularly for signal processing**

(57)    In this invention, a low-power and high-quality DCT transformation based on the Cordic method is presented. The proposed Cordic based Loeffler DCT architecture only requires 38 add and 16 shift operations to carry out the DCT transformation. The complexity is almost the same as the complexity of the binDCT-C5. The simulation results show that the DCT according to the invention reduces the area and the power dissipation of the implementation compared to the original Loeffler DCT significantly. Furthermore, it only has a fraction of the power dissipation of the binDCT-C5. The major contribution of the DCT according to the invention is that it not only reduces the area and power consumption significantly, but also keeps the good transformation quality of the original Loeffler DCT. It is worth noticing that the Cordic based Loeffler DCT according to the invention is very suitable for low-power and high-quality CODECs in multimedia hand-held systems.

Fig. 9

EP 1 850 597 A1

**Description**

The invention relates to a method for performing a Loeffler Discrete Cosine Transformation (DCT) for Signal Processing according to the preamble of claim 1 and a respective circuit according to claim 16 as well as a respective computer program product and a respective computer-readable storage medium.

Recently, many kinds of digital image processing and video compression techniques have been proposed in the literature, such as JPEG, Digital Watermark, MPEG and H.263 [1] - [3]. All of the aforementioned standards require Discrete Cosine Transformations (DCT) [1] to aid image/video compression. Therefore, the DCT has become more and more important in today's image/video processing designs. The usage of the DCT is very suitable for low-power and high-quality CODECs in multimedia hand-held systems, but can be relevant also in every data processing methods, in which data have to be reduced or optimized. Therefore the usage of methods for performing the DCT is very wide spreaded in information technology and related technical equipment.

In the past few years, much research has been done on low power DCT designs [4] - [11]. In consideration of VLSI-implementation, the Flow-Graph Algorithm (FGA) is the most popular way to realize the fast DCT (FDCT) [12], [13]. In 1989, Loeffler et al. [14] proposed a low-complexity FDCT/IDCT algorithm based on FGA that requires only 11 multiply and 29 add operations. However, the multiplications consume about 40% of the power and almost account for 45% of the total area [15]. Thus, Tran [16] - [18] proposed the binDCT which approximates multiplications with add and shift operations. Later, an efficient VLSI architecture and implementation of the binDCT was presented in [19]. Although the binDCT reduces the computational complexity significantly, it suffers from losing about 2 dB in PSNR (Peak Signal to Noise Ratio) compared to the Loeffler DCT [15].

COordinate Rotation DIgital Computer (Cordic) is an algorithm which is used to evaluate many functions and applications in signal processing [20], [21]. In addition, the Cordic algorithm is highly suited for VLSI-implementation. Therefore, Jeong et al. [9] proposed a Cordic based implementation of the DCT which only requires 104 add and 84 shift operations to realize a multiplierless transformation yielding the same transformation quality as the Loeffler DCT. Yu and Swartzlander [22] presented a scaled DCT architecture based on the Cordic algorithm which requires two multiply and 32 add operations. However, this DCT architecture needs additional three Cordic rotations at the end of the flow graph to perform the multiplierless transformation. Therefore, both the Cordic based DCT and the scaled Cordic based DCT need more operations than the binDCT [17] does to carry out an exact transformation.

**The DCT Backgroud**

The two dimensional DCT transforms an 8x8 block sample from spatial domain *f(x,y)* into frequency domain F(k,l) as follows:

$$F(k,l) \quad = \quad \frac{1}{4}C(k)C(l)x=07\sum y=07\sum f(x,y)\cdot$$

$$\cos[\frac{(2x+1)k\pi}{16}]\cos[\frac{(2y+1)l\pi}{16}] \qquad (1)$$

$$C(m) \quad = \quad \begin{cases} \dfrac{1}{\sqrt{2}} & \text{if } m=0 \\ 1 & \text{otherwise.} \end{cases}$$

Since computing the above 2-D DCT by using matrix multiplication requires $8^4$ multiplications, a commonly used approach to reduce the computational complexity is row-column decomposition. The decomposition performs row-wise one-dimensional (1-D) transform followed by a column-wise 1-D transform with an intermediate transposition. An 8-point 1-D DCT can be expressed as follows:

$$F(k) = \frac{1}{2} C(k) \sum_{x=0}^{7} f(x) \cos\left[\frac{(2x+1)k\pi}{16}\right] \qquad (2)$$

$$C(k) = \frac{1}{\sqrt{2}} \quad if \quad k = 0$$

$$C(k) = 1 \qquad otherwise$$

This decomposition approach has two advantages. First, the number of operations is significantly reduced. Second, the original 1-D DCT can be easily replaced by different DCT algorithms efficiently.

**MAC based Loeffler DCT**

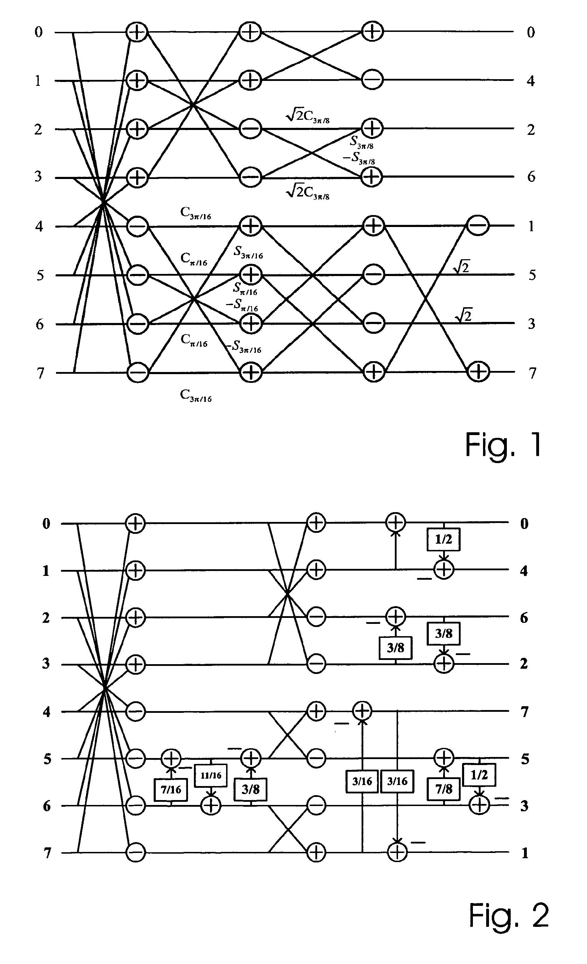

Many 1-D flow graph algorithms have been reported in the literature [12], [13]. A Loeffer 1-D 8-point DCT algorithm [14] requires 11 multiply and 29 add operations. The flow graph of the Loeffler DCT is illustrated in Fig. 1, in which $C_x = \cos(x)$ and $S_x = \sin(x)$. One of its variations has been adopted by the Independent JPEG Group [24] to implement the popular JPEG image coding standard. Note that this factorization requires a uniform scaling factor of $1/2\sqrt{2}$ at the end of the flow graph to obtain the original DCT coefficients. In the 2-D transform this scaling factor becomes 1/8, and it can be easily implemented by a shift operation. Although the Loeffler DCT requires multipliers, which results in large power dissipation and area overhead, it offers better quality than other approaches. Therefore it is especially useful for high-quality CODECs.

**binDCT**

Although the Loeffler DCT is very useful for many image/video compressions, it still needs multiplications which are slow in both software and hardware implementations. More importantly, hardware implementations of general multiplications need a lot of area and power. In this regard, Tran [16] - [18] presented a fast bi-orthogonal block transform called binDCT, which can be implemented by using add and shift operations with lifting scheme (i.e., there is no multiplication). The binDCT is a fast multiplierless approximation of the DCT which inherits all lifting properties, such as fast implementations, invertible integer-to-integer mapping, in-place computation and low dynamic range. However, its quality is worse than the Loeffler DCT$_S$.

The flow graph of an 8-point binDCT-C5 is illustrated in Fig. 2. If there is a close look at the structure, it can be easily observed that all multiplications are replaced by hardware-friendly dyadic values (i.e., in the format of $k/2^m$, where $k$ and $m$ are integers), which can be implemented by using shift and add operations. According to Fig. 2, the binDCT-C5 requires 36 add and 17 shift operations to perform the DCT transformation, which makes it very suitable for VLSI-implementations.

It should be noted that the binDCT also requires specified scaling factors at the end of the flow graph to reconstruct the original DCT coefficients. The detailed scaling factor information can be found in [18]. On the other hand, the most commonly used DCT-based CODECs for signal processing are usually followed by a quantizer, where the DCT outputs are scaled by the corresponding scaling constants that are stored in the quantization table. Hence, each scaling factor of the binDCT output can be incorporated into the quantization table without requiring any additional hardware resources. Although binDCT reduces the computational complexity significantly, it also looses the accuracy of the transformation results.

**Cordic based DCT**

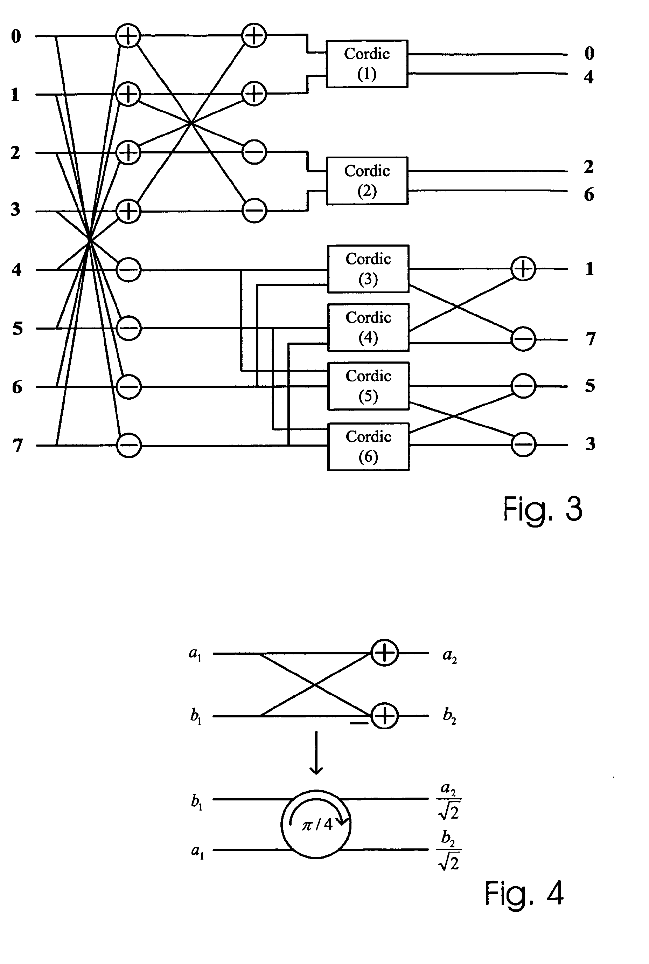

Besides the binDCT, there is another popular method to implement a fast multiplierless approximation of the DCT. That is using the Cordic algorithm [9], [22], [25]. As the binDCT a DCT based on Cordics can also be realized with shift and add operations [26]. A Cordic has a very regular structure and hence, is very suitable for VLSI design. Fig. 3 shows the flow graph of the 8-point Cordic based DCT with six Cordic Rotations [9] which requires 104 add and 84 shift operations.

In order to realize a vector rotation which rotates a vector (x,y) by an angle θ, the circular rotation angle is described as

$$\theta = i\sum \sigma_i \cdot \tan^{-1}(2^{-i})$$

(3)

with

$$\sigma_i = \pm 1.$$

Then, the vector rotation can be performed iteratively [9], [26] as follows:

$$\begin{aligned} x_{i+1} &= x_i - \sigma_i \cdot y_i \cdot 2^{-i} \\ y_{i+1} &= y_i + \sigma_i \cdot x_i \cdot 2^{-i}. \end{aligned}$$

(4)

In Eq. (4), only shift and add operations are required to perform the operation. Furthermore the results of the rotation iterations need to be compensated (scaled) by a compensation factor s . This can be done by using the following iterative approach:

$$\begin{aligned} x_{i+1} &= x_i(1+\gamma_i \cdot F_i) \\ y_{i+1} &= y_i(1+\gamma_i \cdot F_i) \end{aligned}$$

(5)

with

$$i\prod(1+\gamma_i \cdot F_i) \cong s$$

and

$$\gamma_i = (0,1,-1), F_i = 2^{-i}.$$

Equations (4) and (5) describe the Cordic rotation. Implementing the circular rotations of the DCT by Cordic rotations yields the Cordic based DCT as shown in Fig. 3.

When using Cordics to replace the multiplications of the 8-point DCT whose rotation angles θ are fixed, we can skip some unnecessary Cordic iterations without losing accuracy. Table I shows the used rotation and compensation iterations for Jeong's Cordic based algorithm [9], using the standard DCT flow graph as a basis. Although the Cordic based DCT reduces the number of computations, it still needs more operations than the binDCT [17].

Table I: Cordic parameters for [9]

| Cordic | (1) | (2) | (3,6) | (4,5) |
|--------|-----|-----|-------|-------|
| Angle | $\dfrac{\pi}{4}$ | $\dfrac{3\pi}{8}$ | $\dfrac{7\pi}{16}$ | $\dfrac{3\pi}{16}$ |

(continued)

| Rotation iterations [$\sigma_i, i$] according to Eq. (4) | | | | |
|---|---|---|---|---|
| 1 | -1,0 | -1,2 | +1,0 | -1,1 |
| 2 | - | -1,3 | +1,1 | -1,3 |
| 3 | - | -1,6 | +1,3 | -1,10 |
| 4 | - | -1,7 | +1,10 | -1,14 |
| Compensation iterations [$1 + \gamma_i \cdot F_i$] according to Eq. (5) | | | | |
| 1 | $1 - \frac{1}{4}$ | $1 + \frac{1}{32}$ | $\frac{1}{2} + \frac{1}{8}$ | $1 - \frac{1}{8}$ |
| 2 | $1 - \frac{1}{16}$ | $1 + \frac{1}{128}$ | $1 + \frac{1}{256}$ | $1 + \frac{1}{64}$ |
| 3 | $1 + \frac{1}{256}$ | $1 + \frac{1}{1024}$ | $1 + \frac{1}{4096}$ | $1 + \frac{1}{1024}$ |
| 4 | $1 + \frac{1}{512}$ | $1 + \frac{1}{4096}$ | - | $1 + \frac{1}{4096}$ |
| 5 | $1 + \frac{1}{4096}$ | - | - | - |

The object of the invention therefore is realizing a high quality DCT by means of a method with a minimum of shift and add operations without loss of quality.

The object of the invention is solved by a method and a circuit for performing a DCT according to claim 1 and the respective subclaims as well as from the flow graphs decribed herein. Based on the multiple information in the flow graphs a person skilled in information technology can understand immediately the advantages and properties of the invention and adapted the described method to a respective circuit or a respective software product.

The invention proposes a computationally efficient and high-quality Cordic based Loeffler DCT architecture, which is optimized by taking advantage of certain properties of the Cordic algorithm and its implementations. Based on the special properties of the Cordic algorithm, the Cordic based Loeffler DCT is optimized by ignoring some unnoticeable iterations and shifting the compensation steps of each angle to the quantizer. The computational complexity is reduced from 11 multiply and 29 add operations (Loeffler DCT) to 38 add and 16 shift operations (which is almost the same complexity as for the binDCT). Moreover, the experimental results show that the presented Cordic based Loeffler DCT architecture only occupies 19% area and consumes about 16% power of the original Loeffler DCT. Furthermore it reduces the power dissipation to about 42% of that of the binDCT. On the other hand, it also retains the good transformation quality of the Loeffler DCT in PSNR simulation results.

The basic idea of the method according to the invention is that all relations and butterfly stages for carrying out the Loeffler DCT are solely expressed as Cordic transformations and the Cordic transformations are carried out without multiply operations only as a combination of shift and add operations with compensational steps in a common final quantizer. Therefore the description of the steps of the method becomes very uniform and certain properties of the Cordic algorithm and the Cordic based Loeffler DCT can be used for an optimization of the respective method by means of the number of shift and add operations. The compensation steps can predominantly be carried out in a final quatizer which works fast and needs no additional hardware when it is built as a quantization table.

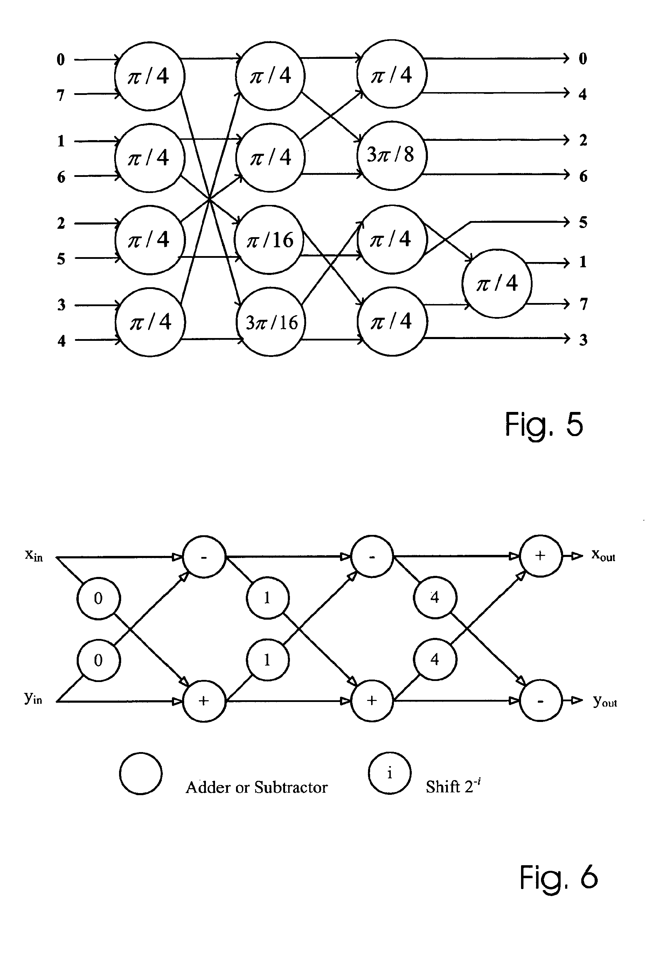

The corresponding relations between the various transformations and their sequence for carrying out the method are shown exactly in the figures 5 to 9 and in tables I and II. Because such flow graphs show the corresponding relations and sequences for each person skilled in the respective art, the claims point to the respective figures. This is the clearest, the best and most specialistic way to describe the method according to the invention without the risk to describe it in less clear wordings.

### Cordic based Loeffler DCT

Based on works about Cordic based signal transforms [27] - [29] an optimized Cordic based Loeffler DCT is proposed. This implementation only requires 38 add and 16 shift operations to perform a multiplierless DCT transformation. The original Loeffler DCT was taken as the starting point for the optimization, because the theoretical lower bound of the number of multiplications required for the 1-D 8-point DCT had been proven to be 11 [30].

In order to derive the proposed method, the butterfly at the beginning of Loeffler's flow graph as shown in Fig.

1 are considered first. In this case the butterfly can be expressed as:

$$\begin{bmatrix} a_2 \\ b_2 \end{bmatrix} = \begin{bmatrix} 1 & 1 \\ -1 & 1 \end{bmatrix} \cdot \begin{bmatrix} b_1 \\ a_1 \end{bmatrix}, \qquad (6)$$

and the matrix can then be decomposed to

$$\begin{bmatrix} 1 & 1 \\ -1 & 1 \end{bmatrix} = \sqrt{2} \cdot \begin{bmatrix} \dfrac{1}{\sqrt{2}} & \dfrac{1}{\sqrt{2}} \\ -\dfrac{1}{\sqrt{2}} & \dfrac{1}{\sqrt{2}} \end{bmatrix}. \qquad (7)$$

This equals a Cordic rotating the input values by $\pi/4$, followed by a scaling of $\sqrt{2}$ as shown in Fig. 4.

The scaled butterflies can also be replaced by Cordics using $\theta = 3\pi/8$ , $\pi/16$ and $3\pi/16$ respectively. Hence, all butterflies of the Loeffler DCT shown in Fig. 1 can be replaced, to derive a pure Cordic based Loeffler DCT as shown in Fig. 5.

As metioned before, the most commonly used DCT-based CODECs for signal processing are usually followed by a quantizer. In this regard some Cordic iterations can be skipped without losing visual quality and the compensation steps can be shifted to the quantization table without using additional hardware. Next, the optimization of each rotation angle to reduce the computational complexity is carried out.

At first, due to the special characteristic of the Loeffler DCT, the five needed compensation iterations of the $\pi/4$ rotation (see Table I) can be shifted to the end of the flow graph. Hence, the $\pi/4$ rotation only needs to perform two add operations.

Second, for the angle $\theta = 3\pi/8$ the number of rotation iterations can be reduced to three and also all compensation steps shifted to the quantizer. Although the optimized $3\pi/8$ rotation will decrease the quality of the results, the influences are not noticeable in video sequence streams or image compression. According to the dependence flow graph of the unfolded Cordic architecture presented in [31], a three stage unfolded Cordic for the angle $\theta = 3\pi/8$ is implemented as shown in Fig. 6. Note that the white circle in Fig. 6 means an Adder or a Subtractor, and the shadowed circle means a shifter. As illustrated, it needs six add and six shift operations to approximate the $3\pi/8$ rotation.

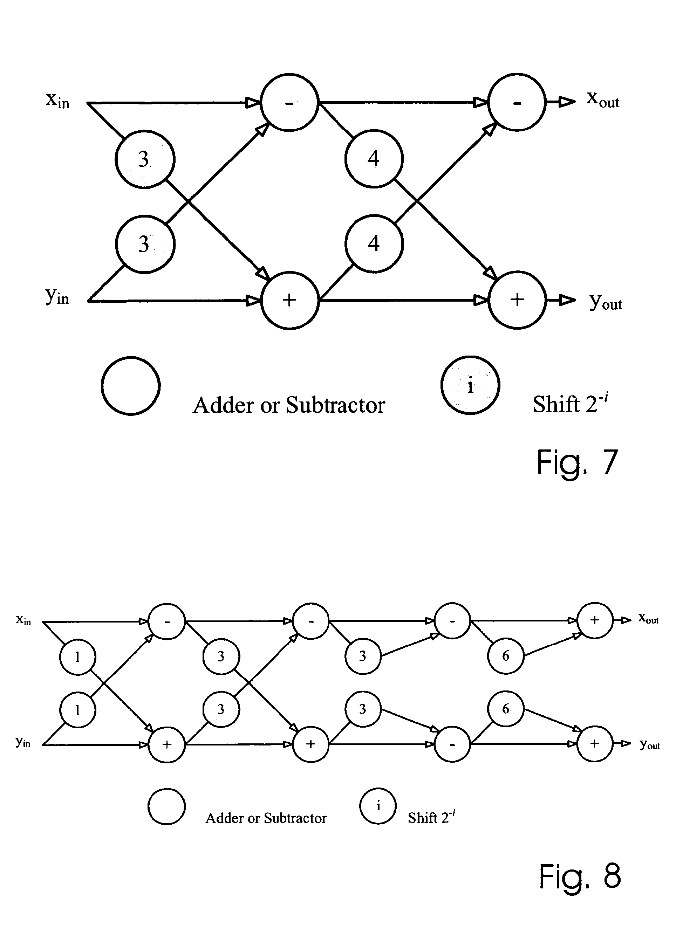

Third, when we take a close look at the angle $\theta = \pi/16$, it can be easily observed that the needed compensation of the $\pi/16$ rotation is very close to one. Thus, the compensation iterations of the $\pi/16$ rotation can be ignored. Therefore, it only needs two iterations in the rotation calculation as shown in Fig. 7.

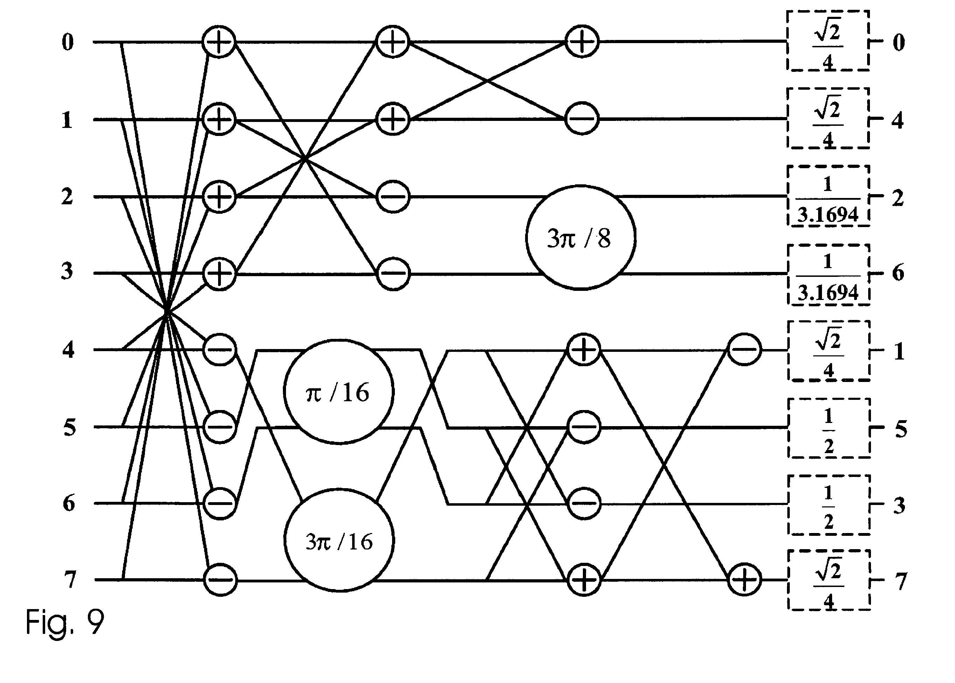

Unfortunately any compensation iterations of the $3\pi/16$ rotation can not be shifted to the end of the graph. This is due to the data correlation between the subsequent stages of the $\pi/16$ and $3\pi/16$ rotations. However, some unnoticeable rotation and compensation iterations can be ignored to reduce the computational complexity of the angle $\theta = 3\pi/16$. The optimized unfolded flow graph as shown in Fig. 8 is a little more complex than that of the other angles. To obtain the Register Transfer Level (RTL) description of the optimized DCT, these flow graphs are used to replace the Cordics shown in Fig. 9.

Table II: Cordic based Loeffler DCT - Cordic parameters

| Cordic | (1) | (2) | (3) | (4) |
|---|---|---|---|---|
| Angle | $\dfrac{\pi}{4}$ | $\dfrac{3\pi}{8}$ | $\dfrac{\pi}{16}$ | $\dfrac{3\pi}{16}$ |
| Rotation iterations [$\sigma_i, \iota$] according to Eq. (4) | | | | |
| 1 | -1,0 | -1,0 | -1,3 | -1,1 |
| 2 | - | -1,1 | -1,4 | -1,3 |
| 3 | - | +1,4 | - | - |

(continued)

| Compensation iterations $[1 + \gamma_i \cdot F_i]$ according to Eq. (5) | | | | |
|---|---|---|---|---|
| 1 | - | - | - | $1 - \frac{1}{8}$ |
| 2 | - | - | - | $1 + \frac{1}{64}$ |

Hence, it only requires 38 add and 16 shift operations to realize the DCT transformation for our proposed Cordic based Loeffler DCT. Fig. 9 shows the optimized flow graph, including the scaling factors incorporated into the quantization table. Table 2 summarizes the Cordic rotation and compensation iterations of the proposed Cordic based Loeffler DCT.

Table III summarizes the number of operations of the different DCT architectures. The proposed DCT according to the invention has the same low computational complexity as the binDCT. But, as shown later, it achieves the same high transformation quality as the Loeffler DCT.

Table III: Complexity of different DCT architectures

| DCT typeOperation | Multiply | Add | Shift |
|---|---|---|---|
| Loeffler DCT | 11 | 29 | 0 |
| Cordic based DCT [9] | 0 | 104 | 82 |
| Cordic based Loeffler DCT according to the invention | 0 | 38 | 16 |
| binDCT-C5 | 0 | 36 | 17 |

## Experiment Environment

In the experiments, different criteria were used to evaluate four architectures: Loeffler DCT, Cordic based DCT, binDCT-C5 and Cordic based Loeffler DCT. The word-length of all implementations is 12 bits. After synthesizing with TSMC 0.13-$\mu$m technology library, Synopsys PrimePower was used to estimate the power consumption at gate-level. Then these DCT architectures were implemented in the JPEG and XVID CODECs to compare and analyze the quality of the compression results.

## Simulation Results

In order to analyze the performance of the proposed Cordic based Loeffler DCT, the four different DCT architectures were modeled as RTL (i.e. Verilog). Please note that constant multipliers were used to model the Loeffler DCT's RTL. After synthesizing with Synopsys Design Compiler using the 0.13-$\mu$m TSMC/Artisan Design Kit library at 1.2v, Synopsys PrimePower was used to estimate the power consumption at gate-level without the interconnections. No tools or further techniques were used to optimize these DCT architectures, such as Synopsys Power Compiler or pipeline stages.

Table IV: TSMC 0.13-$\mu$m at 1.2V without pipeline

| Architecture Measures | Loeffler DCT | Cordic based DCT | Cordic based Loeffler DCT | binDCT-C5 |
|---|---|---|---|---|
| Power (*mW*) | 3.557 | 1.954 | 0.5616 | 0.9604 |
| Area (*GateCount*) | 15.06K | 6.66K | 2.81 K | 2.83K |
| Delay (*ns*) | 13.49 | 15.08 | 8.37 | 12.17 |

The power consumptions, areas, and time delays are shown in Table IV. Some important points can be observed easily. Firstly, the DCT architecture according to the invention only consumes 19% of the area and about 16% of the power of the original Loeffler DCT. Secondly, the DCT architecture according to the invention occupies the same area as the binDCT-C5. However, it has only about 59% of the power dissipation and half the delay time of the binDCT-C5. Finally, it is worth noting that the DCT architecture according to the invention not only reduces the computational complexity significantly, but also achieves the best performance in all criteria.

To further display the low-power features of the proposed method, the Power, Power-Delay Product (PDP), Energy-Delay Product (EDP) and Energy-Delay-Delay Product (EDDP) were analyzed as shown in Table V. The delay is the execution time of the DCT method, and the PDP is the average energy consumed per DCT transformation. A lower PDP means that the power consumption is better translated into speed of each operation and the EDP represents that one can trade increased delay for lower energy of each operation. Finally, the EDDP represents whether or not it results in a voltage-invariant efficiency metric.

Table V: Power, Power-Delay Product (PDP), Energy-Delay Product (EDP) and Energy-Delay-Delay Product (EDDP)

| Architecture<br><br>Measures | Loeffler DCT | Cordic based DCT | Cordic based Loeffler DCT | binDCT-C5 |
|---|---|---|---|---|
| Power | 3.557 | 1.954 | 0.5616 | 0.9604 |
| Power-delay Product | 47.99 | 29.47 | 4.70 | 11.69 |
| Energy-delay Product | 647.39 | 444.41 | 39.34 | 142.27 |
| Energy-Product | 8733.22 | 6701.67 | 329.27 | 1731.34 |

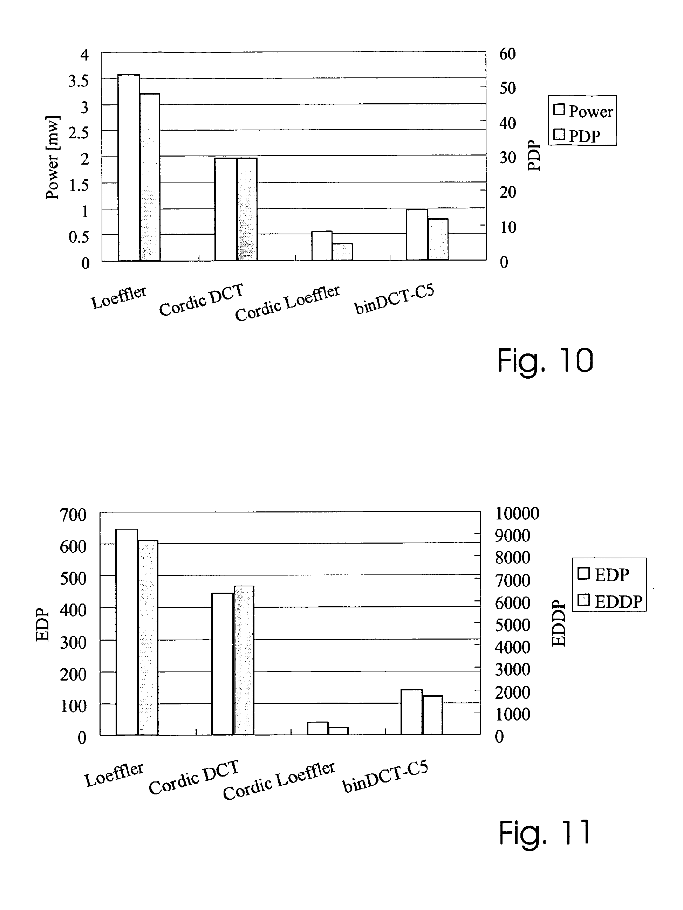

Fig. 10 illustrates the experimental results of the power consumption and the PDP. As illustrated for the PDP the proposed DCT method only consumes about 10% of the PDP of the Loeffler DCT and 16% of the PDP of the Cordic based DCT respectively. It also reduces the PDP by about 59% compared to the binDCT-C5. Fig. 11 shows the EDP and the EDDP. As shown, the performance of the proposed DCT method is far superior to the other DCT methods, especially in the EDDP.

In summary, the Cordic based Loeffler DCT method according to the invention not only reduces power consumption significantly, but also achieves the best results in area and delay time compared to the other methods. Therefore, the DCT method according to the invention is suitable to be applied in low-power and high performance devices.

Next, these DCT architectures will be embedded into JPEG and XVID CODECs respectively to evaluate the quality of each DCT method.

**Performance of Cordic based Loeffler DCT in JPEG**

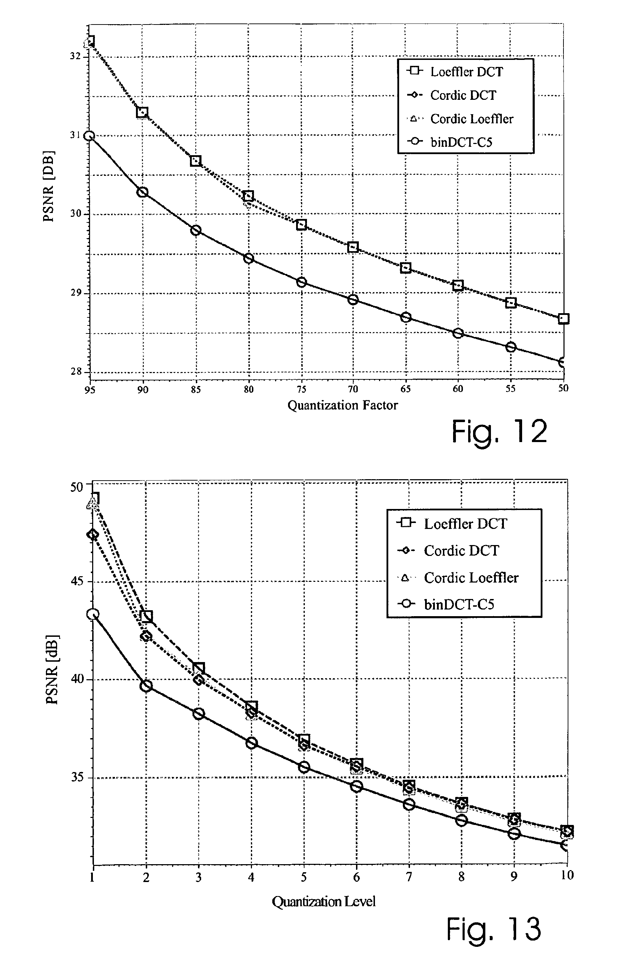

In order to demonstrate the high-quality feature of the DCT method according to the invention, it has been implemented according to the framework of the JPEG standard based on the open source code from the Independent JPEG Group [24]. It should be noted that the JPEG quantization matrix was modified to incorporate the 2-D scaling factors to obtain the original DCT coefficients. Fig. 12 demonstrates the comparison of the average PSNR of the four DCT methods from high to low quality compression (i.e., quantization factors from 95 to 50 - An increasing quantization factor results in better quality) using some well-known test images.

It can be easily noticed from Fig. 12 that the performance of the DCT method according to the invention is very close to that of the Loeffler DCT. Therefore, the quality of the method according to the invention is also much better than that of the binDCT-C5. For example, when the quality factor is 95, the DCT method according to the invention result is about 1 dB higher than that of the binDCT-C5. Table VI lists the PSNRs of each DCT method from high to low quality factors for three different test images. The "Factors" column shows the quality factor from 95 to 50 for each DCT method. In the "Average" row, the average quality of the three images from 95 to 50 factors for each DCT method is shown.

Table VI: The PSNR for quality factors 50 to 95 in JPEG-6B

| DCT Image Factor | Loeffer DCT | | | Cordic DCT | | | Cordic Loeffer | | | binDCT-C5 | | |
|---|---|---|---|---|---|---|---|---|---|---|---|---|
| | Lena | Baboon | Peppers | Lena | Baboon | Peppers | Lena | Baboon | Peppers | Lena | Baboon | Peppers |
| 95 | 35.71 | 28.85 | 32.07 | 35.67 | 28.83 | 32.06 | 35.68 | 28.83 | 32.06 | 33.84 | 28.31 | 30.84 |
| 90 | 34.61 | 27.95 | 31.33 | 34.58 | 27.94 | 31.32 | 34.58 | 27.94 | 31.32 | 33.10 | 27.51 | 30.24 |
| 85 | 33.96 | 27.20 | 30.87 | 33.95 | 27.20 | 30.87 | 33.95 | 27.20 | 30.87 | 32.66 | 26.84 | 29.90 |
| 80 | 33.48 | 26.66 | 30.54 | 33.47 | 26.65 | 30.28 | 33.47 | 26.65 | 30.53 | 32.33 | 26.34 | 29.66 |
| 75 | 33.09 | 26.21 | 30.29 | 33.08 | 26.20 | 30.28 | 33.08 | 26.20 | 30.28 | 32.05 | 25.92 | 29.43 |
| 70 | 32.81 | 25.86 | 30.07 | 32.79 | 25.86 | 30.07 | 32.80 | 25.86 | 30.07 | 31.86 | 25.61 | 29.27 |
| 65 | 32.54 | 25.54 | 29.86 | 32.53 | 25.54 | 29.85 | 32.54 | 25.54 | 29.85 | 31.66 | 25.32 | 29.08 |
| 60 | 32.32 | 25.29 | 29.67 | 32.30 | 25.28 | 29.67 | 32.31 | 25.28 | 29.66 | 31.48 | 25.07 | 28.90 |
| 55 | 32.12 | 25.05 | 29.44 | 32.12 | 25.05 | 29.44 | 32.12 | 25.05 | 29.44 | 31.32 | 24.85 | 28.74 |
| 50 | 31.92 | 24.85 | 29.25 | 31.92 | 24.84 | 29.24 | 31.92 | 24.84 | 29.24 | 31.14 | 24.66 | 28.55 |
| Average | 33.26 | 26.35 | 30.34 | 33.24 | 26.34 | 30.31 | 33.25 | 26.34 | 30.33 | 32.14 | 26.04 | 29.46 |

Both Fig. 12 and Table VI imply that the Cordic based Loeffler DCT method according to the invention has better quality than the binDCT-C5 for the JPEG standard.

**Performance of the Cordic based Loeffler DCT in XVID**

The inventive DCT method was also tested with the video coding standard MPEG-4 by using a publicly available XVID CODEC software [32]. The default DCT method in the CODEC of the selected XVID implementation is based on Loeffler's factorization using floating-point multiplications. In this part each DCT method was implemented into the XVID software, and simulated with some well-known video sequences to show the performance of the method according to the invention. Table VII lists all PSNR values of the different DCT methods from high to low quality compression (i.e., quantization steps from 1 to 10 - A larger quantization step results in worse quality) for three CIF video sequences. Moreover, Fig. 13 illustrates the average PSNRs from Table VII to show the high-quality feature of the DCT method according to the invention.

Table VII: The average PSNR for quantization steps 1 to 10 in XVID

| DCT Sequence Quantization | Loeffer DCT | | | Cordic DCT | | | Cordic Loeffer | | | binDCT-C5 | | |
|---|---|---|---|---|---|---|---|---|---|---|---|---|
| | Mobile | Foreman | Paris | Mobile | Foreman | Paris | Mobile | Foreman | Paris | Mobile | Foreman | Paris |
| 1 | 49.44 | 49.26 | 49.09 | 46.64 | 48.29 | 47.29 | 49.54 | 48.92 | 48.64 | 43.45 | 41.51 | 45.12 |
| 2 | 42.80 | 43.33 | 43.49 | 41.54 | 42.64 | 42.48 | 41.72 | 42.56 | 42.69 | 39.21 | 39.09 | 40.75 |
| 3 | 40.13 | 40.76 | 40.77 | 39.38 | 40.42 | 40.12 | 39.61 | 40.40 | 40.44 | 37.87 | 37.86 | 39.06 |
| 4 | 37.89 | 39.07 | 38.81 | 37.55 | 38.89 | 38.42 | 37.47 | 38.78 | 38.46 | 36.22 | 36.72 | 37.31 |
| 5 | 35.83 | 37.72 | 37.07 | 35.59 | 37.60 | 36.75 | 35.55 | 37.53 | 36.85 | 34.65 | 35.84 | 36.02 |
| 6 | 34.47 | 36.70 | 35.81 | 34.37 | 36.64 | 35.61 | 34.23 | 36.55 | 35.60 | 33.54 | 35.16 | 34.88 |
| 7 | 33.10 | 35.86 | 34.62 | 33.03 | 35.83 | 34.44 | 32.92 | 35.75 | 34.47 | 32.36 | 34.51 | 33.91 |
| 8 | 32.08 | 35.16 | 33.71 | 32.09 | 35.15 | 33.61 | 31.92 | 35.06 | 33.58 | 31.45 | 33.85 | 33.00 |
| 9 | 31.11 | 34.55 | 32.86 | 31.13 | 34.57 | 32.75 | 30.99 | 34.48 | 32.75 | 30.57 | 33.41 | 32.26 |
| 10 | 30.36 | 34.00 | 32.15 | 30.41 | 34.03 | 32.10 | 30.25 | 33.93 | 32.05 | 29.87 | 32.96 | 31.57 |
| Average | 36.72 | 38.64 | 37.84 | 36.17 | 38.40 | 37.36 | 36.42 | 38.40 | 37.55 | 34.92 | 36.09 | 36.39 |

**EP 1 850 597 A1**

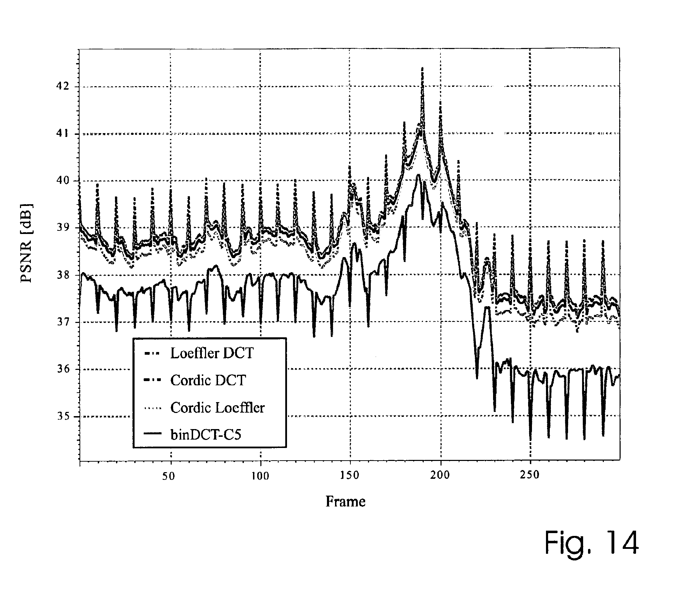

From these PSNR simulation results, one can see that the method according to the invention performs as well as the Loeffler DCT in terms of video quality. For instance, when the quantization step is 4, the PSNR of the DCT method according to the invention is about 1.5 dB higher than that of the binDCT-C5. Also, the average PSNR is about 2 dB higher than that of the binDCT-C5. In Fig. 14, a quantization step of 4 is used for the 300-frame CIF of the "Foreman" test video sequence. Obviously the video sequence simulation results of the Cordic based Loeffer DCT method according to the invention are very similar to the Loeffler DCT.

In summary, these XVID based simulation results clearly show that the Cordic based Loeffler DCT method according to the invention performs favourably compared to the reference implementations in terms of video quality.

**List of figures and tables:**

Figure 1    - Flow graph of an 8-point Loeffler DCT,

Figure 2    - Flow graph of an 8-point binDCT-C5 architecture [18],

Figure 3    - Flow graph of Jeong's 8-point Cordic based DCT [9],

Figure 4    - Replacing a butterfly by a Cordic rotation,

Figure 5    - Flow graph of an 8-point pure Cordic based Loeffler DCT according to the invention,

Figure 6    - The unfolded flow graph of the $\frac{3\pi}{8}$ angle according to the invention,

Figure 7    - The unfolded flow graph of the $\frac{\pi}{16}$ angle according to the invention,

Figure 8    - The unfolded flow graph of the $\frac{3\pi}{16}$ angle according to the invention,

Figure 9    - Flow graph of an 8-point Cordic based Loeffler DCT architecture according to the invention,

Figure 10    - Experimental results of the Power and PDP,

Figure 11    - Experimental results of the EDP and EDDP,

Figure 12    - The average PSNR from high to low compression quality in JPEG-6b,

Figure 13    - The average PSNR from high to low compression quality in XVID,

Figure 14    - The PSNR of the 300-frame QCIF of the test video sequence "Foreman" using a quantization step of 4.

Table I    - Cordic parameters for [9],

Table II    - Cordic based Loeffler DCT - Cordic parameters,

Table III    - Complexity of different DCT architectures,

Table IV    - TSMC 0.13-$\mu$m at 1.2V without pipeline,

Table V    - Power, Power-Delay Product (PDP), Energy-Delay Product (EDP) and Energy-Delay-Delay Product (EDDP),

Table VI    - The PSNR for quality factors 50 to 95 in JPEG-6B,

Table VII    - The average PSNR for quantization steps 1 to 10 in XVID.

**Citations/Literature:**

[1] R.C. Conzalez and R.E. Woods, Digial Image Processing. New Jersey: Prentice-Hall, Inc., 2001.

[2] I.E.G. Richardson, H.264 and MPEG-4 Video Compression. Atrium, England: John Wiley & Sons, 2003.

[3] -----, Video Codec Design. Atrium, England: John Wiley & Sons, 2002.

[4] J.Li and S.L. Lu, "Low power design of two-dimensional DCT, in IEEE Conf. on ASIC and Exhibit, Sept. 1996, pp. 309--312.

[5] N.J. August and D.S. Ha, "Low power design of DCT and IDCT for low bit rate video codecs", IEEE Transactions on Multimedia, vol.6, no.3, pp. 414--422, June 2004.

[6] J.Park, S.Kwon, and K.Roy, "Low power reconfigurable DCT design based on sharing multiplication", in IEEE International Conf. on Acoustics, Speech, and Signal Processing, vol.3, May 2002, pp. III3116--III3119.

[7] T.Xanthopoulos and A.P. Chandrakasan, "A low-power DCT core using adaptive bitwidth and arithmetic activity exploiting signal correlations and quantization", IEEE Journal of Solid-State Circuits, vol.35, no.5, pp. 740--750, May 2000.

[8] K.Kim and P.A. Beerel, "A high-performance low-power asynchronous matrix-vector multiplier for discrete cosine transform", in IEEE Asia Pacific Conf. on ASICs, Aug. 1999, pp. 135--138.

[9] H.Jeong, J.Kim, and W.K. Cho, "Low-power multiplierless DCT architecture using image correlation", IEEE Trans. Consumer Electron., vol. 50, no.1, pp. 262-267, Feb. 2004.

[10] A.Shams, W.Pan, A.Chidanandan, and M.A. Bayoumi, "A low power high performance distributed DCT architecture", in IEEE Computer Society Annual Symposium on VLSI, Apr. 2002, pp. 21--27.

[11] L.Fanucci and S.Saponara, "Data driven VLSI computation for low power DCT-based video coding", in International Conf. on Electronics, Circuits and Systems, Sept. 2002, pp. 541--544.

[12] W.H. Chen, C.Smith, and S.Fralick, "A Fast Computational Algorithm for the Discrete Cosine Transform", IEEE Trans. Commun., vol.25, no.9, pp. 1004-1009, Sept. 1977.

[13] Z.Wang, "Fast algorithms for the discrete W transform and for the discrete Fourier transform", IEEE Trans. Acoust., Speech, Signal Processing, vol.32, no.4, pp. 803--816, Aug. 1984.

[14] C.Loeffler, A.Lightenberg, and G.S. Moschytz, "Practical fast 1-D DCT algorithms with 11-multiplications", in Proc. ICASSP, vol.2, Glasgow,UK, May 1989, pp. 988--991.

[15] C.C. Sung, S.J. Ruan, B.Y. Lin, and M.C. Shie, Quality and Power Effcient Architecture for the Discrete Cosine Transform", IEICE Transactions on Fundamentals Special Section on VLSI Design and CAD Algorithms, vol. E88-A, no.5, Dec. 2005.

[16] T.D. Tran, A fast multiplierless block transform for image and video compression", in International Conf. on Image Processing, Oct. 1999, pp. 822--826.

[17] ------, "The binDCT: fast multiplierless approximation of the DCT", IEEE Signal Processing Lett., vol.7, pp. 141--144, June 2000.

[18] J.Liang and T.D. Tran, "Fast multiplierless approximations of the DCT with the lifting scheme", IEEE Trans. Signal Processing, vol.49, no.12, pp. 3032--3044, Dec. 2001.

[19] P.P. Dang, P.M. Chau, T.Q. Nguyen, and T.D. Tran, "BinDCT and Its Effcient VLSI Architectures for Real-Time Embedded Applications", Journal of Image Science and Technology, vol.49, no.2, pp. 124--137, Mar. 2005.

[20] J.Volder, "The CORDIC trigonometric computing technique", IRE Trans. Electron. Comput., vol. EC-8, pp. 330--334, 1959.

[21] J.Walther, "A unified algorithm for elementary functions", in Proc. Spring Joint Comput. Conf., vol.38, 1971, pp. 379--385.

[22] S. Yu and E.Swartzlander, A scaled DCT architecture with the CORDIC algorithm", IEEE Trans. Signal Processing, vol.50, no.1, pp. 160--167, Jan. 2002.

[23] J.Goetze and G.Hekstra, "An algorithm and architecture based on orthonormal micro-rotations for computing the symmetric EVD", in Integration - The VLSI Journal, vol.20, pp. 21--39, Jan. 1995.

[24] The JPEG-6b Website. http://www.ijg.org/, 1998.

[25] S.Hsiao, Y.Hu, T.Juang, and C.Lee, "Efficient VLSI Implementations of Fast Multiplierless Approximated DCT Using Parameterized Hardware Modules for Silicon Intellectual Property Design", IEEE Trans. Circuits Syst. {I}, vol. 52, no.8, pp. 1568--1579, Aug. 2005.

[26] E.Mariatos, D.Metafas, J.Hallas, and C.Goutis, "A fast DCT processor, based on special purpose CORDIC rotators", in IEEE International Symposium on Circuits and Systems, vol.4, May 1994, pp. 271--274.

[27] K.K. Parhi and T.Nishitani, Digial Signal Processing for Multimedia Systems. New York: MARCEL DEKKER, 1999.

[28] B.Heyne, M.Bucker, and J.Goetze, "Implementation of a Cordic Based FFT on a Reconfigurable Hardware Accelerator", in 3rd Karlsruhe Workshop on Software Radios, Mar. 2004.

[29] B.Heyne and J.Goetze, "A Pure Cordic Based FFT for Reconfigurable Digital Signal Processing", in 12th European Signal Processing Conference, Sept. 2004.

[30] P.Rieder, K.Gerganoff, J.Goetze, and J.Nossek, "Parametrization and Implementation of Orthogonal Wavelet Transforms", in Proc. IEEE Int. Conf. on Acoust., Speech, Signal Processing (Atlanta, U.S.A), 1996.

[31] P.Duhamel and H.H'Mida, "New 2n DCT algorithms suitable for VLSI implementation", in IEEE International Conference on ICASSP, vol.12, Apr. 1987, pp. 1805--1808.

[32] The XVID Website. http://www.xvid.org/, 2005.

**Claims**

1.  Method for performing a Loeffler discrete cosine transformation (Loeffler DCT) particularly for signal processing, using the coordinate rotation digital computer method (Cordic method),
    wherein
    all relations and butterfly stages for carrying out the Loeffler DCT are solely expressed as Cordic transformations and the Cordic transformations are carried out without multiply operations only as a combination of shift and add operations with compensational steps in a final quantizer.

2.  Method according to claim 1, wherein all relations and butterfly stages for carrying out the Loeffler DCT are solely expressed as Cordic transformations according to figure 5,

3.  Method according to one of the claims 1 or 2, wherein all Cordictransformations except the Cordic transformations for $\pi/16$, $3\pi/8$, $3\pi/16$ are directly carried out as a combination of shift and add operations each with a compensational step in a final quantizer,

4.  Method according to one of the claims 1 to 3, wherein only 38 add and 16 shift operations are needed for performing a accurate Loeffler DCT according to figure 9.

5. Method according to one of the preceding claims, wherein the scaled butterflies of the Loeffler DCT are replaced by Cordic transformations using $\theta = 3\pi/8$, $\theta = \pi/16$, $\theta = 3\pi/16$ and $\theta = \pi/4$ to derive a pure Cordic based Loeffler DCT.

6. Method according to claim 5, wherein the needed compensation iterations of the $\pi/4$ rotation are shifted to the final quantizer.

7. Method according to one of the preceding claims, wherein the Cordic transformation of $\pi/4$ is carried out with two add operations.

8. Method according to one of the preceding claims, wherein the Cordic transformations for $\pi/16$ are carried out as a combination of shift and add operations according to figure 6.

9. Method according to one of the preceding claims, wherein the Cordic transformations for $3\pi/8$ are carried out as a combination of shift and add operations according to figure 7.

10. Method according to claim 9, wherein the Cordic transformation for $3\pi/8$ is carried out with three rotation iterations and shifting all compensational steps to the final quantizer.

11. Method according to one of the claims 9 or 10, wherein the Cordic transformation for $3\pi/8$ is carried out with six add and six shift operations for approximating the $3\pi/8$ Cordic rotation.

12. Method according to one of the preceding claims, wherein the Cordic transformation for $\pi/16$ is carried out with two rotation iterations while ignoring the needed compensation.

13. Method according to one of the preceding claims, wherein the Cordic transformation for $3\pi/16$ is carried out as a combination of shift and add operations according to figure 8 including two compensational steps,

14. Method according to claim 13, wherein the Cordic transformation for $3\pi/16$ is carried out with four rotation iterations.

15. Method according to one of the claims 1 to 3, wherein the compensation steps in the final quantizer are carried out using a quantization table.

16. Circuit for carrying out the method according to claim 1, wherein the circuit shows shifting means, adding and substracting means and a final quantizer.

17. Circuit according to claim 16, wherein the circuit is built in VLSI design.

18. Circuit according to claim 16, wherein the final quantizer is built using a quantization table.

19. Computer program product which contains a computer-readable storage medium on which a program is stored which makes it possible for a computer after being loaded into the storage area of the computer to carry out a method for performing a Loeffler discrete cosine transformation (Loeffler DCT) particularly for signal processing in accordance with one of the claims 1 to 15.

20. Computer-readable storage medium on which a program is stored which makes it possible for a computer after being loaded into the storage area of the computer to carry out a method for performing a Loeffler discrete cosine transformation (Loeffler DCT) particularly for signal processing in accordance with one of the claims 1 to 15.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

**European Patent Office**

**EUROPEAN SEARCH REPORT**

Application Number

EP 06 00 8407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | LOEFFLER C ET AL: "Practical fast 1-D DCT algorithms with 11 multiplications" PROCEEDINGS OF THE 1989 INTERNATIONAL CONFERENCE ON ACOUSTICS, SPEECH AND SIGNAL PROCESSING (ICASSP 1989), vol. 2, 23 May 1989 (1989-05-23), pages 988-991, XP010082573 IEEE, New York, NY, USA * the whole document * | 1-20 | INV. H04N7/26 G06F17/14 |
| A | US 5 831 881 A (FIEDRICH SVEN [DE] ET AL) 3 November 1998 (1998-11-03) * abstract * * column 4, line 9 - line 25 * * column 5, line 27 - line 40 * * figures 1,3,5,6 * | 1,16,17, 19,20 | |
| D,A | MARIATOS E P ET AL: "A fast DCT processor, based on special purpose CORDIC rotators" PROCEEDINGS OF THE 1994 IEEE SYMPOSIUM ON CIRCUITS AND SYSTEMS (ISCAS 1994), vol. 4, 30 May 1994 (1994-05-30), pages 271-274, XP010143285 IEEE, New York, NY, USA ISBN: 0-7803-1915-X * abstract * * page 271, left-hand column, line 36 - right-hand column, line 16 * * page 272, left-hand column, line 1 - line 15 * * page 272, left-hand column, line 23 - page 273, right-hand column, line 3 * * figures 1,2 * * table 1 * | 1,7-9, 11-14, 16,17, 19,20 | TECHNICAL FIELDS SEARCHED (IPC) H04N G06F |

-/--

The present search report has been drawn up for all claims

| Place of search | Date of completion of the search | Examiner |
|---|---|---|
| Berlin | 15 February 2007 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 8407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | HEYNE B ET AL: "A Pure Cordic Based FFT for Reconfigurable Digital Signal Processing" PROCEEDINGS OF THE XII. EUROPEAN SIGNAL PROCESSING CONFERENCE (EUSIPCO 2004), 6 September 2004 (2004-09-06), pages 1513-1516, XP002420234 Vienna, Austria * abstract * * page 1513, left-hand column, line 31 - line 35 * * page 1514, left-hand column, line 14 - page 1515, left-hand column, line 18 * * figures 1-5 * | 1,2,5,6, 10,16, 17,19,20 | |

-----

TECHNICAL FIELDS SEARCHED (IPC)

The present search report has been drawn up for all claims

| Place of search | Date of completion of the search | Examiner |
|---|---|---|
| Berlin | 15 February 2007 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 00 8407

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2007

| Patent document cited in search report | Publication date | Patent family member(s) | Publication date |
|---|---|---|---|
| US 5831881 A | 03-11-1998 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R.C. CONZALEZ ; R.E. WOODS.** Digial Image Processing. Prentice-Hall, Inc, 2001
- **I.E.G. RICHARDSON.** H.264 and MPEG-4 Video Compression. Atrium. John Wiley & Sons, 2003
- Video Codec Design. Atrium. Video Codec Design. Atrium. John Wiley & Sons, 2002
- **J.LI ; S.L. LU.** Low power design of two-dimensional DCT. *IEEE Conf. on ASIC and Exhibit,* September 1996, 309-312
- **N.J. AUGUST ; D.S. HA.** Low power design of DCT and IDCT for low bit rate video codecs. *IEEE Transactions on Multimedia,* June 2004, vol. 6 (3), 414-422
- **J.PARK ; S.KWON ; K.ROY.** Low power reconfigurable DCT design based on sharing multiplication. *IEEE International Conf. on Acoustics, Speech, and Signal Processing,* May 2002, vol. 3, III3116-III3119
- **T.XANTHOPOULOS ; A.P. CHANDRAKASAN.** A low-power DCT core using adaptive bitwidth and arithmetic activity exploiting signal correlations and quantization. *IEEE Journal of Solid-State Circuits,* May 2000, vol. 35 (5), 740-750
- **K.KIM ; P.A. BEEREL.** A high-performance low-power asynchronous matrix-vector multiplier for discrete cosine transform. *IEEE Asia Pacific Conf. on ASICs,* August 1999, 135-138
- **H.JEONG ; J.KIM ; W.K. CHO.** Low-power multiplierless DCT architecture using image correlation. *IEEE Trans. Consumer Electron.,* February 2004, vol. 50 (1), 262-267
- **A.SHAMS ; W.PAN ; A.CHIDANANDAN ; M.A. BAYOUMI.** A low power high performance distributed DCT architecture. *IEEE Computer Society Annual Symposium on VLSI,* April 2002, 21-27
- **L.FANUCCI ; S.SAPONARA.** Data driven VLSI computation for low power DCT-based video coding. *International Conf. on Electronics, Circuits and Systems,* September 2002, 541-544
- **W.H. CHEN ; C.SMITH ; S.FRALICK.** A Fast Computational Algorithm for the Discrete Cosine Transform. *IEEE Trans. Commun.,* September 1977, vol. 25 (9), 1004-1009
- **Z.WANG.** Fast algorithms for the discrete W transform and for the discrete Fourier transform. *IEEE Trans. Acoust., Speech, Signal Processing,* August 1984, vol. 32, 803-816

- **C.LOEFFLER ; A.LIGHTENBERG ; G.S. MOSCHYTZ.** Practical fast 1-D DCT algorithms with 11-multiplications. *Proc. ICASSP,* May 1989, vol. 2, 988-991
- **C.C. SUNG ; S.J. RUAN ; B.Y. LIN ; M.C. SHIE.** Quality and Power Effcient Architecture for the Discrete Cosine Transform. *IEICE Transactions on Fundamentals Special Section on VLSI Design and CAD Algorithms,* December 2005, vol. E88-A (5
- **T.D. TRAN.** A fast multiplierless block transform for image and video compression. *International Conf. on Image Processing,* October 1999, 822-826
- The binDCT: fast multiplierless approximation of the DCT. *IEEE Signal Processing Lett.,* June 2000, vol. 7, 141-144
- **J.LIANG ; T.D. TRAN.** Fast multiplierless approximations of the DCT with the lifting scheme. *IEEE Trans. Signal Processing,* December 2001, vol. 49 (12), 3032-3044
- **P.P. DANG ; P.M. CHAU ; T.Q. NGUYEN ; T.D. TRAN.** BinDCT and Its Efficent VLSI Architectures for Real-Time Embedded Applications. *Journal of Image Science and Technology,* March 2005, vol. 49 (2), 124-137
- **J.VOLDER.** The CORDIC trigonometric computing technique. *IRE Trans. Electron. Comput.,* 1959, vol. EC-8, 330-334
- **J.WALTHER.** A unified algorithm for elementary functions. *Proc. Spring Joint Comput. Conf.,* 1971, vol. 38, 379-385
- **S. YU ; E.SWARTZLANDER.** A scaled DCT architecture with the CORDIC algorithm. *IEEE Trans. Signal Processing,* January 2002, vol. 50 (1), 160-167
- **J.GOETZE ; G.HEKSTRA.** An algorithm and architecture based on orthonormal micro-rotations for computing the symmetric EVD. *Integration - The VLSI Journal,* January 1995, vol. 20, 21-39
- *The JPEG-6b Website.,* 1998, http://www.ijg.org
- **S.HSIAO ; Y.HU ; T.JUANG ; C.LEE.** Efficient VLSI Implementations of Fast Multiplierless Approximated DCT Using Parameterized Hardware Modules for Silicon Intellectual Property Design. *IEEE Trans. Circuits Syst. {I,* August 2005, vol. 52 (8), 1568-1579

- **E.MARIATOS ; D.METAFAS ; J.HALLAS ; C.GOUTIS.** A fast DCT processor, based on special purpose CORDIC rotators. *IEEE International Symposium on Circuits and Systems,* May 1994, vol. 4, 271-274
- **K.K. PARHI ; T.NISHITANI.** Digial Signal Processing for Multimedia Systems. MARCEL DEKKER, 1999
- **B.HEYNE ; M.BUCKER ; J.GOETZE.** Implementation of a Cordic Based FFT on a Reconfigurable Hardware Accelerator. *3rd Karlsruhe Workshop on Software Radios,* March 2004

- **B.HEYNE ; J.GOETZE.** A Pure Cordic Based FFT for Reconfigurable Digital Signal Processing. *12th European Signal Processing Conference,* September 2004
- **P.RIEDER ; K.GERGANOFF ; J.GOETZE ; J.NOSSEK.** Parametrization and Implementation of Orthogonal Wavelet Transforms. *Proc. IEEE Int. Conf. on Acoust., Speech, Signal Processing,* 1996
- **P.DUHAMEL ; H.H'MIDA.** New 2n DCT algorithms suitable for VLSI implementation. *IEEE International Conference on ICASSP,* April 1987, vol. 12, 1805-1808
- *The XVID Website.,* 2005, http://www.xvid.org